# EUROPÄISCHE PATENTANMELDUNG

(11) **EP 4 818 638 A1**
(43) Veröffentlichungstag der Anmeldung: **07.10.2026**
(21) Anmeldenummer: 26162190.8
(22) Anmeldetag: 04.03.2026
(51) Int. Cl.: G01C 15/00

(54) **ROTATIONSLASER MIT EINER NIVELLIEREINHEIT**

(30) Priorität: 20.03.2025 DE 102025110741
(71) Anmelder: Robert Bosch GmbH, 70442 Stuttgart (DE)
(72) Erfinder: Carabelli, Ben William, 70771 Leinfelden-Echterdingen (DE); Hahl, Markus, 70825 Korntal-Muenchingen (DE); Rasheva, Lalka, 70567 Stuttgart (DE); Weitbrecht, Christof, 70567 Stuttgart (DE); Corbin, Brooke, Chicago, IL 60647 (US)

(57) **Zusammenfassung**

Bei einem Rotationslaser mit einem Gehäuse, in dem eine Lasereinheit und eine Nivelliereinheit angeordnet sind, wobei die Nivelliereinheit mindestens einen Neigungssensor zur Ermittlung einer jeweiligen Ausrichtung einer der Lasereinheit zugeordneten Achse relativ zum Gehäuse sowie mindestens eine Neigungseinstellungseinheit zum Einstellen einer vorgegebenen Zielneigung der zugeordneten Achse relativ zum Gehäuse aufweist, und wobei eine Bedieneinheit (150) mit einer Eingabeeinheit (152) und einer Anzeigeeinheit (151) vorgesehen ist, ist die Anzeigeeinheit (151) dazu ausgebildet, in einem ersten Betriebsmodus des Rotationslasers die vorgegebene Zielneigung der zugeordneten Achse in einer ersten Darstellungsart (230), insbesondere in einer ersten Farbe, zu visualisieren.

## Beschreibung

### Stand der Technik

Die vorliegende Erfindung betrifft einen Rotationslaser mit einem Gehäuse, in dem eine Lasereinheit und eine Nivelliereinheit angeordnet sind, wobei die Nivelliereinheit mindestens einen Neigungssensor zur Ermittlung einer jeweiligen Ausrichtung einer der Lasereinheit zugeordneten Achse relativ zum Gehäuse sowie mindestens eine Neigungseinstellungseinheit zum Einstellen einer vorgegebenen Zielneigung der zugeordneten Achse relativ zum Gehäuse aufweist, und wobei eine Bedieneinheit mit einer Eingabeeinheit und einer Anzeigeeinheit vorgesehen ist.

Aus dem Stand der Technik ist ein derartiger Rotationslaser mit einem Gehäuse, in dem eine Lasereinheit und eine Nivelliereinheit angeordnet sind, bekannt. Die Nivelliereinheit weist mindestens einen Neigungssensor zur Ermittlung einer jeweiligen Ausrichtung einer der Lasereinheit zugeordneten Achse relativ zum Gehäuse sowie mindestens eine Neigungseinstellungseinheit zum Einstellen einer vorgegebenen Zielneigung der zugeordneten Achse relativ zum Gehäuse auf. Eine Bedieneinheit mit einer Eingabeeinheit und einer Anzeigeeinheit ist vorgesehen.

### Offenbarung der Erfindung

Die Erfindung betrifft einen Rotationslaser mit einem Gehäuse, in dem eine Lasereinheit und eine Nivelliereinheit angeordnet sind, wobei die Nivelliereinheit mindestens einen Neigungssensor zur Ermittlung einer jeweiligen Ausrichtung einer der Lasereinheit zugeordneten Achse relativ zum Gehäuse sowie mindestens eine Neigungseinstellungseinheit zum Einstellen einer vorgegebenen Zielneigung der zugeordneten Achse relativ zum Gehäuse aufweist, und wobei eine Bedieneinheit mit einer Eingabeeinheit und einer Anzeigeeinheit vorgesehen ist. Die Anzeigeeinheit ist dazu ausgebildet, in einem ersten Betriebsmodus des Rotationslasers die vorgegebene Zielneigung der zugeordneten Achse in einer ersten Darstellungsart, insbesondere in einer ersten Farbe, zu visualisieren.

Die Erfindung ermöglicht somit die Bereitstellung eines Rotationslasers, bei dem durch die erste Darstellungsform eine einfache und zuverlässige Visualisierung des aktivierten ersten Betriebsmodus ermöglicht werden kann.

Vorzugsweise ist die Anzeigeeinheit dazu ausgebildet, in einem zweiten und/oder dritten Betriebsmodus des Rotationslasers eine vorgegebene Zielneigung oder eine aktuelle Neigung der zugeordneten Achse in einer zweiten Darstellungsart, insbesondere in einer zweiten Farbe, zu visualisieren.

Somit kann sicher und zuverlässig eine Visualisierung im zweiten und dritten Betriebsmodus ermöglicht werden, die sich vom ersten Betriebsmodus unterscheidet.

Bevorzugt ist der erste Betriebsmodus ein Selbstnivellierungs-Modus, in dem die vorgegebene Zielneigung einer deckungsgleichen Neigung der zugeordneten Achse mit einer horizontalen Ebene entspricht. Vorzugsweise ist der zweite Betriebsmodus ein Neigungseinstellungs-Modus, in dem die vorgegebene Zielneigung einer Neigung der zugeordneten Achse in einem vorgegebenen Winkel zu einer horizontalen Ebene entspricht. Bevorzugt ist der dritte Betriebsmodus ein manueller Modus, in dem die Anzeigeeinheit eine aktuelle Neigung der zugeordneten Achse zu einer horizontalen Ebene anzeigt.

Somit kann auf einfache Art und Weise jedem Betriebsmodus eine entsprechende Neigung der zugeordneten Achse zu einer horizontalen Ebene zugeordnet werden.

Vorzugsweise bedient im manuellen Modus ein Benutzer des Rotationslasers die mindestens eine Neigungseinstellungseinheit zum Ausrichten in eine vorgegebene Zielneigung der zugeordneten Achse zur horizontalen Ebene manuell.

Somit kann einfach und unkompliziert im manuellen Modus ein Ausrichten in eine vorgegebene Zielneigung ermöglicht werden.

Bevorzugt ist eine Steuer- und Regelungseinheit vorgesehen, die in zumindest einem Betriebsmodus die mindestens eine Neigungseinstellungseinheit derart ansteuert, dass eine durch den mindestens einen Neigungssensor ermittelte Neigung der zugeordneten Achse deckungsgleich zu einer horizontalen Ebene oder einer vorgegebenen Zielneigung der zugeordneten Achse ausgerichtet wird, wobei die Anzeigeeinheit einen der horizontalen Ebene oder einem der vorgegebenen Zielneigung zugeordneten Zahlenwert während der Ausrichtung blinkend anzeigt.

Somit kann sicher und zuverlässig ein Ausrichtungsvorgang visualisiert werden.

Vorzugsweise zeigt die Anzeigeeinheit in zumindest einem Betriebsmodus bei einer einer horizontalen Ebene entsprechenden deckungsgleichen Ausrichtung der Neigung der zugeordneten Achse und/oder bei einer deckungsgleichen Ausrichtung der Neigung entsprechend der vorgegebenen Zielneigung der zugeordneten Achse einen der Zielneigung zugeordneten Zahlenwert dauerhaft an.

Somit kann einfach und unkompliziert eine Visualisierung einer deckungsgleichen Ausrichtung der zugeordneten Achse mit der horizontalen Ebene und/oder der vorgegebenen Zielneigung ermöglicht werden.

Die Anzeigeeinheit ist bevorzugt als Segmentanzeige ausgebildet, wobei ein separates Segment zur Visualisierung eines zumindest einem Betriebsmodus zugeordneten Zahlenwertes in Prozent, eines zugeordneten Zahlenwertes in Grad und/oder eines Vorzeichens des angezeigten Zahlenwertes vorgesehen ist.

Somit kann auf einfache Art und Weise eine anwendungsspezifische Visualisierung des Zahlenwertes ermöglicht werden.

Vorzugsweise ist die Segmentanzeige zweifarbig ausgebildet und/oder das separate Segment ist einfarbig oder zweifarbig ausgebildet, oder eine Hintergrundbeleuchtung der Anzeigeeinheit ist zweifarbig ausgebildet.

Somit kann leicht und unkompliziert eine farbige Anzeigeeinheit bereitgestellt werden.

Bevorzugt weist die Anzeigeeinheit einen einer ersten Neigungsachse zugeordneten ersten Bereich zum Anzeigen einer ersten Neigung der zugeordneten Achse entlang der ersten Neigungsachse und einen einer zweiten Neigungsachse zugeordneten zweiten Bereich zum Anzeigen einer zweiten Neigung entlang der zweiten Neigungsachse auf.

Somit kann eine effiziente Anzeigeeinheit zum exakten und präzisen Anzeigen bereitgestellt werden.

Darüber hinaus betrifft die vorliegende Erfindung ein Verfahren zum Anzeigen einer Neigung einer der Lasereinheit des oben beschriebenen Rotationslasers zugeordneten Achse relativ zu einem Gehäuse des Rotationslasers, das folgende Schritte aufweist:
- Auswahl des ersten, zweiten oder dritten Betriebsmodus,
- Einstellen einer Zielneigung von einer horizontalen Ebene, oder Einstellen einer aktuellen Neigung der zugeordneten Achse gegenüber einer horizontalen Ebene, und
- Anzeigen der Zielneigung im ersten Betriebsmodus mittels einer Visualisierung in einer ersten Darstellungsart, insbesondere einer ersten Farbe, oder Anzeigen der Zielneigung im zweiten Betriebsmodus in einer zweiten Darstellungsart, insbesondere einer zweiten Farbe, oder Anzeigen der aktuellen Neigung der zugeordneten Achse der Lasereinheit im dritten Betriebsmodus in der zweiten Darstellungsart, insbesondere der zweiten Farbe, in einer Anzeigeeinheit.

Die Erfindung ermöglicht somit die Bereitstellung eines Verfahrens zum Anzeigen einer Neigung einer einer Lasereinheit eines Rotationslasers zugeordneten Achse relativ zu einer horizontalen Ebene, bei dem durch die erste und zweite Darstellungsform eine einfache und zuverlässige Visualisierung einer ermittelten Neigung ermöglicht werden kann.

Vorzugsweise wird ein der aktuellen Neigung oder der vorgegebenen Zielneigung zugeordneter Zahlenwert in Prozent oder in Grad dargestellt.

Somit kann auf einfache Art und Weise eine geeignete Darstellung des ermittelten Zahlenwerts ermöglicht werden.

Bevorzugt wird bei einem Verfahren der Neigungseinstellungseinheit in eine horizontale Ebene oder in die vorgegebene Zielneigung der zugeordneten Achse die Zielneigung auf der Anzeigeeinheit blinkend angezeigt.

Somit kann sicher und zuverlässig ein Ausrichtungsvorgang visualisiert werden.

**In** zumindest einem Betriebsmodus wird vorzugsweise ein der Zielneigung der zugeordneten Achse oder ein der aktuellen Neigung zugeordneter Zahlenwert bis zu einem vorgegebenen Wert mit einem Trennzeichen zur Erzeugung einer Dezimalstelle angezeigt und ab einem Wert, der größer als der vorgegebene Wert ist, mit deaktiviertem Trennzeichen dargestellt.

Somit kann einfach und unkompliziert ein exaktes Anzeigen der ermittelten Neigung ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine perspektivische Ansicht eines erfindungsgemäßen Rotationslasers mit einer Antriebseinheit,
- Fig. 2: eine Draufsicht auf eine Anzeigeeinheit des Rotationslasers von Fig. 1 in einem ersten Betriebsmodus mit einer ersten Darstellungsform,
- Fig. 3: eine Draufsicht auf die Anzeigeeinheit des Rotationslasers von Fig. 2 in einem zweiten Betriebsmodus in einer zweiten Darstellungsform,
- Fig. 4: eine Draufsicht auf die Anzeigeeinheit des Rotationslasers von Fig. 2 und Fig. 3 in einem dritten Betriebsmodus in der zweiten Darstellungsform,
- Fig. 5: eine Draufsicht auf die Anzeigeeinheit des Rotationslasers von Fig. 4 bei einer vergleichsweise großen Neigung,
- Fig. 6: eine Draufsicht auf eine alternative Ausführungsform der Anzeigeeinheit des Rotationslasers von Fig. 1,
- Fig. 7: eine Draufsicht auf eine weitere Ausführungsform der Anzeigeeinheit des Rotationslasers von Fig. 1, und
- Fig. 8: ein schematisches Diagramm eines Verfahrens zum Anzeigen einer ermittelten Neigung in der Anzeigeeinheit von Fig. 1 bis Fig. 7.

### Beschreibung der Ausführungsbeispiele

**In** den Figuren werden Elemente mit gleicher oder vergleichbarer Funktion mit identischen Bezugszeichen versehen und nur einmal genauer beschrieben.

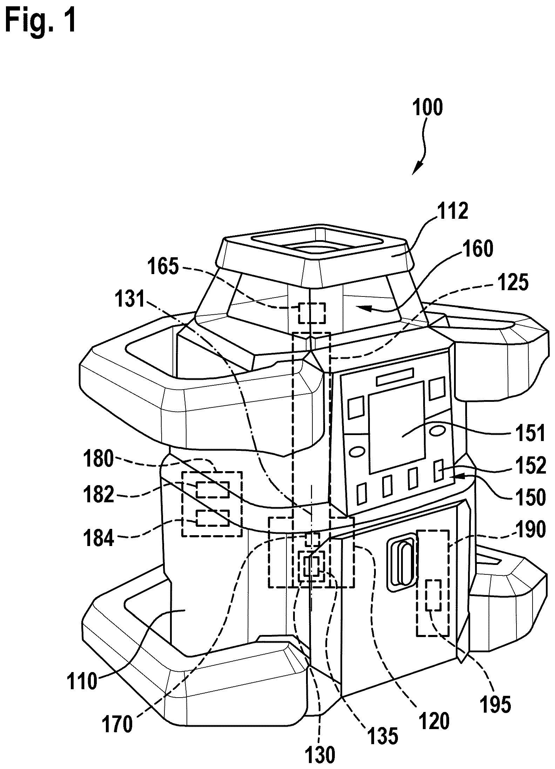

Fig. 1 zeigt einen beispielhaften Rotationslaser 100 mit einem Gehäuse 110, in dem eine Lasereinheit 130 mit einer Laserdiode 135 zur Erzeugung eines Laserstrahls angeordnet ist. Unter einem "Rotationslaser" kann im Kontext der vorliegenden Erfindung auch ein Baulaser oder ein Nivellierlaser verstanden werden. Des Weiteren ist in dem Gehäuse 110 beispielhaft eine Antriebseinheit 120 zum rotierenden Antrieb einer Spindel 125 angeordnet.

Die Lasereinheit 130 ist illustrativ derart an der Spindel 125 angeordnet, dass durch eine Rotation der Spindel 125 der von der Lasereinheit 130 erzeugte Laserstrahl in einer zugeordneten Ebene rotiert. Hierzu ist der Spindel 125 vorzugsweise ein Rotationskopf 160 mit einem Strahlenumleiter 165 zugeordnet. Der Strahlenumleiter 165 ist bevorzugt dazu ausgebildet, den Laserstrahl umzulenken, wodurch der Laserstrahl die zugeordnete Ebene projiziert. Je nach Bauart des Rotationslasers 100 kann die projizierte Ebene horizontal, vertikal oder z.B. mit einem definierten Neigungswinkel zur Erdoberfläche verlaufen. Vorzugsweise ist die Antriebseinheit 120 als Elektromotor ausgebildet.

Darüber hinaus ist in dem Gehäuse 110 bevorzugt eine Elektronikeinheit 190 mit einer Regelungs- und Überwachungsvorrichtung 195 angeordnet. Die Regelungs- und Überwachungsvorrichtung 195 ist vorzugsweise zur Regelung einer Laserleistung der Lasereinheit 130 in Abhängigkeit von einer Betriebsart ausgebildet. Hierbei wird eine Rotationsgeschwindigkeit der Spindel 125 der Antriebseinheit 120 gesteuert oder geregelt. Hierzu ist der Spindel 125 bevorzugt eine Ermittlungseinheit 170 zugeordnet.

Gemäß einer Ausführungsform ist dem Gehäuse 110 ein dem Rotationskopf 160 zugeordneter Schutzkäfig 112 zum Schutz vor einem Anschlagen des Rotationskopfs 160 zugeordnet.

Der Elektronikeinheit 190 ist bevorzugt eine Bedieneinheit 150 mit einer als Display ausgebildeten Anzeigeeinheit 151 und einer Eingabeeinheit 152 zugeordnet. Die Bedieneinheit 150 ist dabei bevorzugt steuer- oder regeltechnisch mit der Elektronikeinheit 190, insbesondere mit der Regelungs- und Überwachungsvorrichtung 195, verbunden. Die Eingabeeinheit 152 umfasst vorzugsweise zumindest ein Tastenfeld. Alternativ weist die Eingabeeinheit 152 einen Drehregler, einen Touchscreen, einen Schieberegler, eine Fernbedienung oder dergleichen auf. Über die Eingabeeinheit 152 ist durch einen Nutzer z.B. eine Rotationsgeschwindigkeit für die Spindel 125 eingebbar. Alternativ ist die Rotationsgeschwindigkeit der Lasereinheit 130 in einer Betriebsart automatisch regelbar.

Vorzugsweise weist der Rotationslaser 100 eine Nivelliereinheit 180 auf. Die Nivelliereinheit 180 weist bevorzugt zumindest einen Neigungssensor 184 auf, der dazu ausgebildet ist, eine Neigung des Rotationskopfs 160, insbesondere des Strahlenumleiters 165, und/oder der Lasereinheit 130 bzw. einer der Lasereinheit 130 zugeordneten Achse 131 relativ zum Lot bzw. zu einer horizontalen Ebene zu bestimmen. Hierbei wird vorzugsweise eine Neigung des Rotationskopfs 160, insbesondere des Strahlenumleiters 165, und/oder der Lasereinheit 130 bzw. der der Lasereinheit 130 zugeordneten Achse 131 zu einer vorgegebenen, bevorzugt horizontalen Richtung bzw. zu einem Lot bestimmt. Darüber hinaus weist die Nivelliereinheit 180 vorzugsweise mindestens eine Neigungseinstellungseinheit 182 auf, die dazu ausgebildet ist, den Rotationskopf 160, insbesondere den Strahlenumleiter 165, und/oder die Lasereinheit 130 bzw. die Achse 131 der Lasereinheit 130, in Abhängigkeit von einer mittels des zumindest einen Neigungssensors 184 bestimmten Lage, vorzugsweise einer Neigung der Lasereinheit 130 bzw. der Achse 131 der Lasereinheit 130 und/oder des Rotationskopfs 160, relativ zum Gehäuse 110, bevorzugt zum Lot auszurichten. Vorzugsweise ist die Neigungseinstellungseinheit 182 als Neigungseinstellmotor ausgebildet.

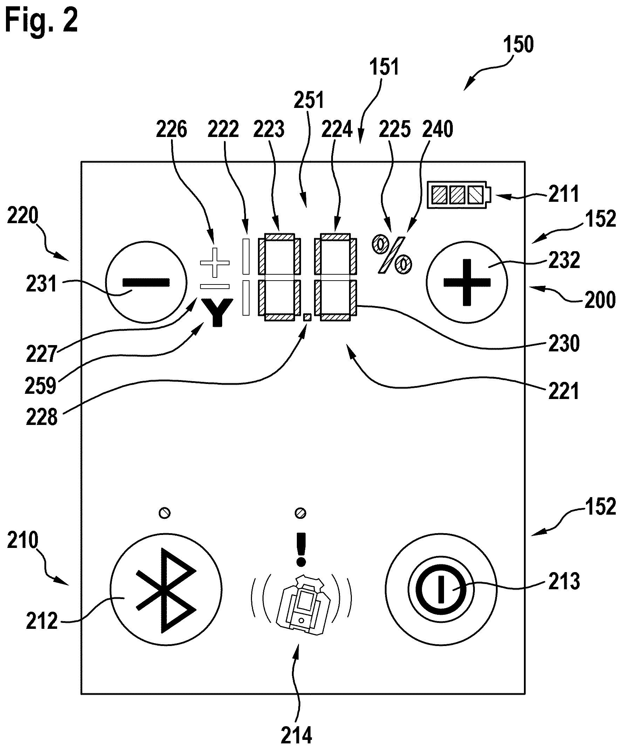

Fig. 2 zeigt die Bedieneinheit 150 von Fig. 1 mit der Anzeigeeinheit 151 und der Eingabeeinheit 152. Die Bedieneinheit 150 weist vorzugsweise eine Batteriestatusanzeige 211 auf, die einen Batteriestatus des vorzugsweise batteriebetriebenen Rotationslasers 100 von Fig. 1 visualisiert. Die Batteriestatusanzeige 211 ist beispielhaft in einem illustrativ oberen rechten Eckbereich der Bedieneinheit 150 angeordnet. Des Weiteren weist die Bedieneinheit 150 einen illustrativ unteren Eingabebereich 210 auf. Der Eingabebereich 210 weist vorzugsweise einen Ein-/Aus-Schalter 213 zum Einschalten und Ausschalten des Rotationslasers 100 von Fig. 1 auf. Ebenfalls weist der Eingabebereich 210 illustrativ ein Bluetooth-Aktivierungs-Bedienelement 212 zum Aktivieren einer Bluetooth-Verbindung und/oder zum Koppeln mit einem externen Gerät mittels der Bluetooth-Verbindung. Darüber hinaus weist der Eingabebereich 210 ein Anzeigesymbol 214 auf, das bei einem Fehler des Rotationslasers 100 von Fig. 1 aktiviert bzw. beleuchtet ist. Des Weiteren weist die Bedieneinheit 150 einen illustrativ oberen Bereich 220 zum Einstellen eines Betriebsmodus des Rotationslasers 100 von Fig. 1 sowie dem Betriebsmodus zugeordneter Werte auf.

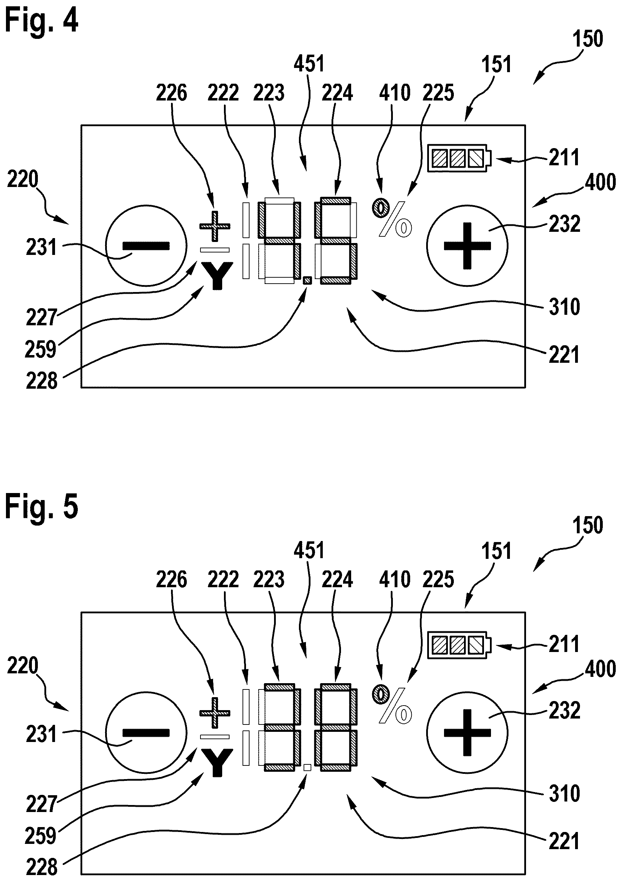

Vorzugsweise ist die Anzeigeeinheit 151 als Segmentanzeige 221 ausgebildet. Bevorzugt weist die Segmentanzeige 221 drei Segmente 222, 223, 224 sowie ein Trennzeichen 228 zur Visualisierung eines Zahlenwertes 251 auf. Vorzugsweise zeigt die Anzeigeeinheit 151 den Zahlenwert 251 (und 451 in Fig. 4) bis zu einem vorgegebenen Wert mit einem Trennzeichen 228 zur Erzeugung einer Dezimalstelle an und ab einem Wert, der größer als der vorgegebene Wert ist, stellt die Anzeigeeinheit 151 den Zahlenwert mit deaktiviertem Trennzeichen 228 dar.

Beispielhaft ist die Segmentanzeige 221 als eine 2,5-stellige Segmentanzeige ausgebildet. Bevorzugt weist die Anzeigeeinheit 151 ein separates Segment 225, 226, 227 auf. Hierbei ist ein separates Segment 225 zur Visualisierung des zumindest einem Betriebsmodus zugeordneten Zahlenwertes 251 in Prozent 240 oder Grad (410 in Fig. 4) ausgebildet. Alternativ kann ein separates Segment 225 für ein Anzeigen in Prozent und ein weiteres separates Segment 225 für eine Anzeige in Grad vorhanden sein. Ein zusätzliches separates Segment 226 ist zur Visualisierung eines positiven Vorzeichens des angezeigten Zahlenwertes 251 ausgebildet und ein weiteres zusätzliches separates Segment 227 ist zur Visualisierung eines negativen Vorzeichens des angezeigten Zahlenwertes 251 ausgebildet. Im Gegensatz zum Segment 227 ist das Segment 226 jedoch optional, sodass in einer Variante auch auf das Segment 226 verzichtet werden kann.

Bevorzugt ist die Segmentanzeige 221 zweifarbig ausgebildet. Vorzugsweise sind zumindest das separate Segment 225 und das Trennzeichen 228 zweifarbig ausgebildet. Alternativ oder optional ist zumindest eins, bevorzugt alle separaten bzw. zusätzlichen separaten Segmente 225, 226, 227 einfarbig oder zweifarbig ausgebildet. Alternativ oder optional ist eine Hintergrundbeleuchtung der Anzeigeeinheit 151 zweifarbig ausgebildet. Hierbei ist zumindest die Segmentanzeige 221 bzw. die Segmente 222, 223, 224, das Trennzeichen 228 und/oder die separaten bzw. zusätzlichen separaten Segmente 225, 226, 227 mit einer Hintergrundbeleuchtung ausgestattet. Eine den separaten bzw. zusätzlichen separaten Segmenten 225, 226, 227 zugeordnete Hintergrundbeleuchtung ist bevorzugt einfarbig ausgebildet.

Des Weiteren weist der Bereich 220 illustrativ zwei Bedienelemente 231, 232 zum Einstellen eines Zielneigungswerts und/oder zur Auswahl und Aktivierung eines Betriebsmodus auf. Dabei ist ein Bedienelement 231 illustrativ links von der Segmentanzeige 221 angeordnet und ein Bedienelement 232 ist illustrativ rechts von der Segmentanzeige 221 angeordnet.

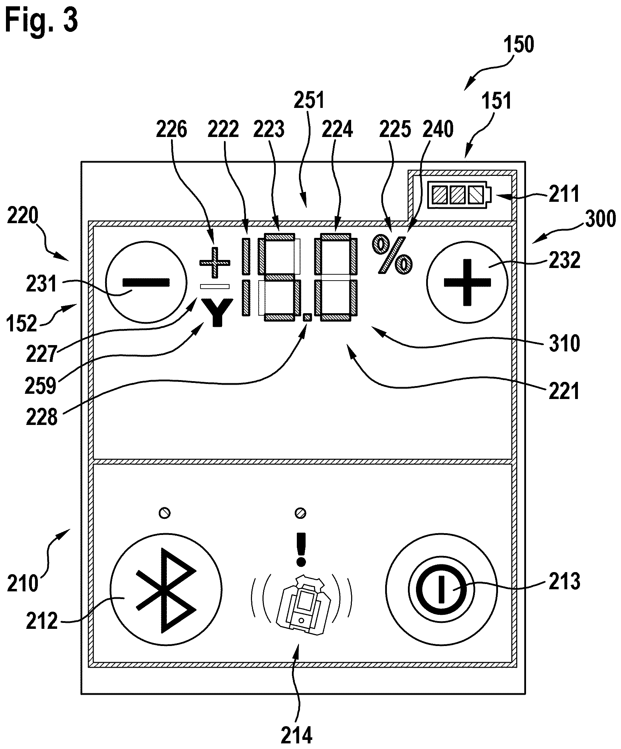

Vorzugsweise ist die Anzeigeeinheit 151 dazu ausgebildet, in einem ersten Betriebsmodus 200 des Rotationslasers 100 von Fig. 1 eine vorgegebene Zielneigung der Achse 131 von Fig. 1 der Lasereinheit 130 von Fig. 1 in einer ersten Darstellungsart 230, insbesondere in einer ersten Farbe, zu visualisieren. Des Weiteren ist die Anzeigeeinheit 151 dazu ausgebildet, in einem zweiten und/oder dritten Betriebsmodus (300 in Fig. 3; 400 in Fig. 4) des Rotationslasers 100 von Fig. 1 eine vorgegebene Zielneigung oder eine aktuelle Neigung der Achse 131 von Fig. 1 der Lasereinheit 130 von Fig. 1 in einer zweiten Darstellungsart (310 in Fig. 3), insbesondere in einer zweiten Farbe, zu visualisieren. Vorzugsweise sind die erste und zweite Darstellungsart 230 (und 310 in Fig. 3) bzw. die erste und zweite Farbe unterschiedlich. Die erste und zweite Darstellungsart 230 (und 310 in Fig. 3) bzw. die erste und zweite Farbe dienen im Wesentlichen dazu, den ersten Betriebsmodus 200 klar identifizieren zu können.

Bevorzugt ist die erste Farbe grün und die zweite Farbe rot. Es wird jedoch darauf hingewiesen, dass die vorliegende Erfindung nicht auf eine erste Farbe in grün und eine zweite Farbe in rot eingeschränkt ist. So können die erste und zweite Farbe beliebig ausgewählt werden.

Vorzugsweise ist der erste Betriebsmodus 200 ein Selbstnivellierungs-Modus, in dem die vorgegebene Zielneigung einer deckungsgleichen Neigung der Achse 131 von Fig. 1 der Lasereinheit 130 von Fig. 1 mit einer horizontalen Ebene entspricht. Der zweite Betriebsmodus (300 in Fig. 3) ist vorzugsweise ein Neigungseinstellungs-Modus, in dem die vorgegebene Zielneigung einer Neigung der Achse 131 von Fig. 1 der Lasereinheit 130 von Fig. 1 in einem vorgegebenen Winkel zu einer horizontalen Ebene entspricht. Bevorzugt ist der dritte Betriebsmodus (400 in Fig. 4) ein manueller Modus, in dem die Anzeigeeinheit 151 eine aktuelle Neigung der Achse 131 von Fig. 1 der Lasereinheit 130 von Fig. 1 zu einer horizontalen Ebene anzeigt. Im manuellen Modus bedient vorzugsweise ein Benutzer des Rotationslasers 100 von Fig. 1 die mindestens eine Neigungseinstellungseinheit 182 von Fig. 1 zum Ausrichten in die Zielneigung der Achse 131 von Fig. 1 der Lasereinheit 130 von Fig. 1 manuell.

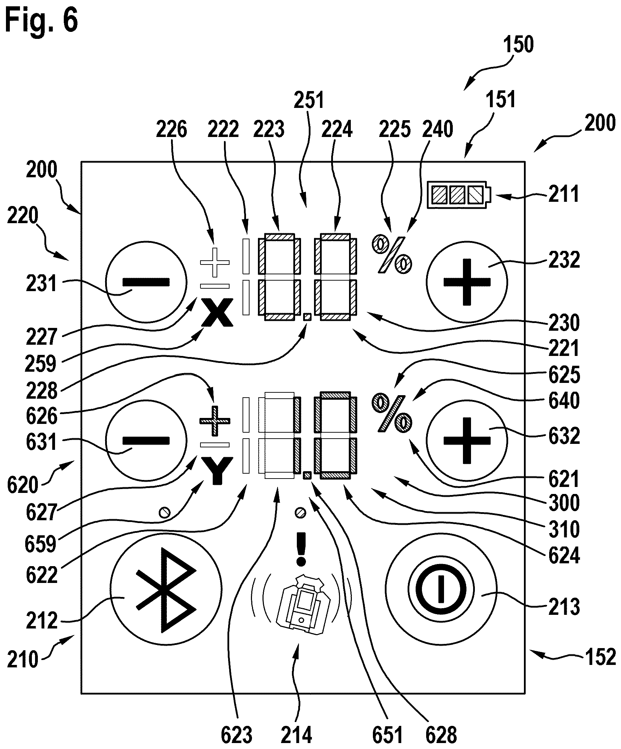

Bevorzugt visualisiert die Anzeigeeinheit 151 den einem Betriebsmodus zugeordneten Zahlenwert 251 (und 451 in Fig. 4) in Prozent 240 (und 640 in Fig. 6) oder Grad (410 in Fig. 4). Beispielhaft visualisiert die Anzeigeeinheit 151 einen dem ersten und zweiten Betriebsmodus 200 (und 300 in Fig. 3) zugeordneten Zahlenwert 251 in Prozent 240 (und 640 in Fig. 6) und einen dem dritten Betriebsmodus (400 in Fig. 4) zugeordneten Zahlenwert (451 in Fig. 4) in Grad (410 in Fig. 4). Vorzugsweise wird im zweiten Betriebsmodus (300 in Fig. 3) bzw. im Neigungseinstellungs-Modus die vorgegebene bzw. eingestellte Zielneigung mit Vorzeichen mittels der zusätzlichen separaten Segmente 226, 227 und mit dem separaten Segment 225 in der Einheit Prozent 240 (und 640 in Fig. 6) angezeigt. Im dritten Betriebsmodus (400 in Fig. 4) bzw. dem manuellen Modus wird bevorzugt die durch den zumindest einen Neigungssensor 184 von Fig. 1 gemessene Neigung bzw. die aktuelle Neigung mit Vorzeichen mittels der zusätzlichen separaten Segmente 226, 227 mit dem separaten Segment 225 in der Einheit Grad (410 in Fig. 4) angezeigt.

Bevorzugt steuert die Steuer- und Regelungseinheit 195 von Fig. 1 in zumindest einem Betriebsmodus die mindestens eine Neigungseinstellungseinheit 182 von Fig. 1 derart an, dass die durch den zumindest einen Neigungssensor 184 von Fig. 1 ermittelte Neigung der Achse 131 von Fig. 1 der Lasereinheit 130 von Fig. 1 deckungsgleich zur horizontalen Ebene oder einer vorgegebenen Zielneigung der Achse 131 von Fig. 1 der Lasereinheit 130 von Fig. 1 ausgerichtet wird. Während einer Ausrichtung der Lasereinheit 130 von Fig. 1 durch die Neigungseinstellungseinheit 182 von Fig. 1 blinkt die Anzeigeeinheit 151. Insbesondere steuert die Steuer- und Regelungseinheit 195 von Fig. 1 im ersten Betriebsmodus 200 bzw. dem Selbstnivellierungs-Modus die mindestens eine Neigungseinstellungseinheit 182 von Fig. 1 vorzugsweise derart an, dass die durch den zumindest einen Neigungssensor 184 von Fig. 1 ermittelte Neigung der Achse 131 von Fig. 1 der Lasereinheit 130 von Fig. 1 deckungsgleich zur horizontalen Ebene ist. Des Weiteren steuert die Steuer- und Regelungseinheit 195 von Fig. 1 im zweiten Betriebsmodus (300 in Fig. 3) bzw. dem Neigungseinstellungs-Modus die mindestens eine Neigungseinstellungseinheit 182 von Fig. 1 vorzugsweise derart an, dass die durch den zumindest einen Neigungssensor 184 von Fig. 1 ermittelte Neigung der Achse 131 von Fig. 1 der Lasereinheit 130 von Fig. 1 einer vorgegebenen Zielneigung der Achse 131 von Fig. 1 der Lasereinheit 130 von Fig. 1 entspricht.

Vorzugsweise zeigt die Anzeigeeinheit 151 in zumindest einem Betriebsmodus bei einer der horizontalen Ebene entsprechenden deckungsgleichen Ausrichtung der Neigung der Achse 131 von Fig. 1 der Lasereinheit 130 von Fig. 1 und/oder bei einer deckungsgleichen Ausrichtung der Neigung entsprechend der vorgegebenen Zielneigung der Achse 131 von Fig. 1 der Lasereinheit 130 von Fig. 1 einen der Neigung zugeordneten Zahlenwert 251 (und 451 in Fig. 4) dauerhaft an. Hierbei stoppt vorzugsweise bei einem Erreichen einer gewünschten Ausrichtung der Lasereinheit 130 bzw. der Achse 131 von Fig. 1 der Lasereinheit 130 von Fig. 1 durch die Neigungseinstellungseinheit 182 von Fig. 1 die Ausrichtung und der Zahlenwert 251, der beim Ausrichten der Achse 131 von Fig. 1 der Lasereinheit 130 von Fig. 1 blinkt, blinkt nun nicht mehr und leuchtet dauerhaft bzw. konstant. Vorzugsweise leuchtet im ersten Betriebsmodus 200 bzw. dem Selbstnivellierungs-Modus bei einer der horizontalen Achse entsprechenden deckungsgleichen Ausrichtung der Neigung der Achse 131 von Fig. 1 der Lasereinheit 130 von Fig. 1 der der Zielneigung zugeordnete Zahlenwert 251 dauerhaft. Alternativ oder optional leuchtet im zweiten Betriebsmodus (300 in Fig. 3) bzw. dem Neigungseinstellungs-Modus bei einer deckungsgleichen Ausrichtung der Neigung entsprechend der vorgegebenen Zielneigung der Achse 131 von Fig. 1 der Lasereinheit 130 von Fig. 1 der der vorgegebenen Zielneigung zugeordnete Zahlenwert 251 dauerhaft. Alternativ oder optional leuchtet im dritten Betriebsmodus (400 in Fig. 4) ein der aktuellen Neigung zugeordneter Zahlenwert (451 in Fig. 4) immer dauerhaft.

Bevorzugt weist die Anzeigeeinheit 151 den einer ersten Neigungsachse 259 zugeordneten ersten Bereich 220 zum Anzeigen einer ersten Neigung der Achse 131 von Fig. 1 der Lasereinheit 130 von Fig. 1 entlang der ersten Neigungsachse 259 auf und/oder einen einer zweiten Neigungsachse (659 in Fig. 6) zugeordneten zweiten Bereich (620 in Fig. 6) zum Anzeigen einer zweiten Neigung entlang der zweiten Neigungsachse (659 in Fig. 6). Beispielhaft ist die erste Neigungsachse 259 in Fig. 2 durch ein "Y" visualisiert. Alternativ kann die erste Neigungsachse 259 durch ein "X" visualisiert werden, wie beispielhaft in Fig. 6 gezeigt. Hierbei können die beiden Neigungsachsen 259 (und 659 in Fig. 6) unabhängig voneinander in unterschiedlichen Betriebsmodi betrieben werden, wodurch sich die Darstellungsart in den zwei Bereichen 220 (und 620 in Fig. 6) voneinander unterscheiden kann.

Illustrativ ist in Fig. 2 der erste Betriebsmodus 200 bzw. der Selbstnivellierungs-Modus aktiviert. Vorzugsweise wird der erste Betriebsmodus 200 bzw. der Selbstnivellierungs-Modus durch die erste Darstellungsart, vorzugsweise in der ersten Farbe 230 gezeigt. Ferner wird der der Zielneigung zugeordnete Zahlenwert 251 mit "0.0%" angezeigt, wobei ein Blinken der Segmentanzeige 221 indiziert, dass eine Ausrichtung der Lasereinheit 130 von Fig. 1 durch die Nivellierungseinheit 180 von Fig. 1 bzw. eine Nivellierung noch im Gange ist und die Zielneigung noch nicht erreicht ist. Bevorzugt bleibt bei einer Nivellierung auch die Lasereinheit 130 von Fig. 1 bzw. die Laserdiode 135 von Fig. 1 ausgeschaltet. Die Laserdiode 135 von Fig. 1 geht erst an, sobald die Zielneigung bis zu einer zulässigen Toleranz erreicht wurde. Da der erste Betriebsmodus 200 für einen Benutzer des Rotationslasers 100 von Fig. 1 besonders kritisch ist, weil der erste Betriebsmodus hauptsächlich für großflächige Arbeiten wie z.B. Betongussarbeiten verwendet wird, können bei einer versehentlichen oder fehlerhaften Neigungseinstellung hohe Folgekosten verursacht werden.

Fig. 3 zeigt die Bedieneinheit 150 mit der Anzeigeeinheit 151 und der Eingabeeinheit 152 von Fig. 2 in einem zweiten Betriebsmodus 300 bzw. in einem Neigungseinstellungs-Modus. Im zweiten Betriebsmodus 300 bzw. dem Neigungseinstellungs-Modus entspricht der angezeigte Zahlenwert 251 der vorgegebenen bzw. durch einen Benutzer des Rotationslasers 100 von Fig. 1 eingestellten Zielneigung. Die Zielneigung wird dabei, wie in Fig. 3 gezeigt, mit einem Vorzeichen mittels der zusätzlichen separaten Segmente 226, 227 und bevorzugt mit der Einheit Prozent 240 (und 640 in Fig. 6) angezeigt.

In Fig. 3 ist der dem zweiten Betriebsmodus 300 zugeordnete Zahlenwert 251 der vorgegebenen Zielneigung beispielhaft "+15.0%" und ist in einer zweiten Darstellungsart 310 bzw. der zweiten Farbe dargestellt. Durch ein Blinken der Segmentanzeige 221 wird indiziert, dass eine Ausrichtung der Lasereinheit 130 von Fig. 1 durch die Nivellierungseinheit 180 von Fig. 1 noch im Gange ist und die Zielneigung noch nicht erreicht ist. Ist die Zielneigung erreicht, dann leuchtet die Segmentanzeige 221 dauerhaft bzw. konstant.

Fig. 4 zeigt den Bereich 220 der Bedieneinheit 150 mit der Anzeigeeinheit 151 von Fig. 2 und Fig. 3 in einem dritten Betriebsmodus 400 bzw. in einem manuellen Modus. Im dritten Betriebsmodus 400 bzw. dem manuellen Modus entspricht ein angezeigter Zahlenwert 451 einer aktuellen, durch den zumindest einen Neigungssensor 184 von Fig. 1 gemessenen Neigung. Die aktuelle Neigung wird dabei, wie in Fig. 4 gezeigt, mit einem Vorzeichen mittels der zusätzlichen separaten Segmente 226, 227 und im separaten Segment 225 mit der Einheit Grad 410 angezeigt. In Fig. 4 ist der dem dritten Betriebsmodus 400 zugeordnete Zahlenwert 451 beispielhaft "+4.5°" und ist in der zweiten Darstellungsart 310 bzw. der zweiten Farbe dargestellt.

Fig. 5 zeigt den Bereich 220 der Bedieneinheit 150 mit der Anzeigeeinheit 151 von Fig. 2 bis Fig. 4 im dritten Betriebsmodus 400 bzw. in einem manuellen Modus. Im manuellen Modus leuchtet die Segmentanzeige 221 dauerhaft bzw. konstant. Wie oben beschrieben, zeigt die Anzeigeeinheit 151 den Zahlenwert 451 bis zu einem vorgegebenen Wert mit einem Trennzeichen 228 zur Erzeugung einer Dezimalstelle an und ab einem Wert, der größer als der vorgegebene Wert ist, stellt die Anzeigeeinheit 151 den Zahlenwert 451 mit deaktiviertem Trennzeichen 228 dar. Bevorzugt ist der vorgegebene Wert 19,9, sodass bei einem Zahlenwert 451 unterhalb 19,9 das Trennzeichen 228 aktiviert ist und bei einem Zahlenwert 451 oberhalb 19,9 deaktiviert ist. So wird z.B. der Zahlenwert 451 "+1.9°" mit Trennzeichen 228 dargestellt und der Zahlenwert 451 "- 34°" wird ohne Trennzeichen 228 dargestellt. In Fig. 5 ist der angezeigte Zahlenwert 451 "+38°" und liegt oberhalb dem vorgegebenen Wert 19,9, weshalb das Trennzeichen 228 deaktiviert ist.

Fig. 6 zeigt die Bedieneinheit 150 mit der Anzeigeeinheit 151 und der Eingabeeinheit 152 von Fig. 2 bis Fig. 5 mit dem Bereich 220 von Fig. 2 bis Fig. 5 und einem weiteren, illustrativ unteren Bereich 620. Wie oben beschrieben, ist der Bereich 220 einer ersten Neigungsachse 259 zugeordnet und zum Anzeigen einer ersten Neigung der Achse 131 von Fig. 1 der Lasereinheit 130 von Fig. 1 entlang der ersten Neigungsachse 259 ausgebildet. Der Bereich 620 ist beispielhaft einer zweiten Neigungsachse 659 zugeordnet und zum Anzeigen einer zweiten Neigung entlang der zweiten Neigungsachse 659 ausgebildet. Beispielhaft ist die erste Neigungsachse 259 in Fig. 6 durch ein "X" visualisiert und die zweite Neigungsachse 659 ist durch ein "Y" visualisiert. Die beiden Bereiche 220, 620 sind vorzugsweise unabhängig voneinander.

Bevorzugt weist die Anzeigeeinheit 151 die dem Bereich 220 zugeordnete Segmentanzeige 221 und eine dem Bereich 620 zugeordnete Segmentanzeige 621 auf. Die Segmentanzeige 621 ist vorzugsweise identisch zur Segmentanzeige 221 ausgebildet. Bevorzugt weist die Segmentanzeige 621 drei Segmente 622, 623, 624 sowie ein Trennzeichen 628 zur Visualisierung eines Zahlenwerts 651 auf.

Analog zur Segmentanzeige 221 ist die Segmentanzeige 621 als eine 2,5-stellige Segmentanzeige ausgebildet. Bevorzugt weist die Anzeigeeinheit 151 separate Segmente 625, 626, 627 auf, die dem Bereich 620 zugeordnet sind. Hierbei ist das separate Segment 625 zur Visualisierung eines zumindest einem Betriebsmodus zugeordneten Zahlenwertes 651 in Prozent 640 oder Grad 410 in Fig. 4 ausgebildet. Das separate Segment 626 kann optional sein und ist illustrativ zur Visualisierung eines positiven Vorzeichens des angezeigten Zahlenwertes 651 ausgebildet und das separate Segment 627 ist zur Visualisierung eines negativen Vorzeichens des angezeigten Zahlenwertes 651 ausgebildet.

Bevorzugt ist die Segmentanzeige 621 zweifarbig ausgebildet. Alternativ oder optional ist zumindest eines und bevorzugt sind alle separaten Segmente 625, 626, 627 einfarbig oder zweifarbig ausgebildet. Alternativ oder optional ist eine Hintergrundbeleuchtung der Anzeigeeinheit 151 zweifarbig ausgebildet.

Des Weiteren weist der Bereich 620 illustrativ zwei Bedienelemente 631, 632 zum Einstellen eines Zielneigungswerts auf. Dabei ist ein Bedienelement 631 illustrativ links von der Segmentanzeige 621 angeordnet und ein Bedienelement 632 ist illustrativ rechts von der Segmentanzeige 621 angeordnet.

Illustrativ ist der Bereich 220 im ersten Betriebsmodus 200 angeordnet, wobei die Segmentanzeige 221 den Zahlenwert 251 "0.0%" in der ersten Darstellungsart 230 bzw. der ersten Farbe visualisiert. Der Bereich 620 visualisiert eine dem zweiten Betriebsmodus 300 zugeordnete Zielneigung "+1.0%" in der zweiten Darstellungsart 310 bzw. der zweiten Farbe. Alternativ kann der Bereich 620 eine dem dritten Betriebsmodus 400 zugeordnete aktuelle Neigung "+1.0°" in der zweiten Darstellungsart 310 bzw. der zweiten Farbe visualisieren.

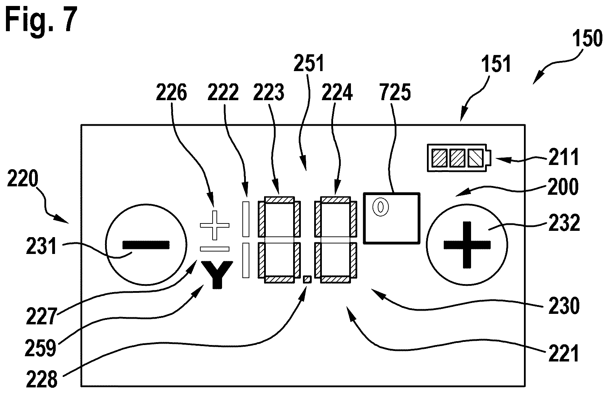

Fig. 7 zeigt den Bereich 220 der Bedieneinheit 150 mit der Anzeigeeinheit 151 von Fig. 2 bis Fig. 6 im ersten Betriebsmodus 200. Die Segmentanzeige 221 weist beispielhaft ein alternatives separates Segment 725 auf, das im Vergleich zum bevorzugt zweifarbig ausgebildeten separaten Segment 225 von Fig. 2 bis Fig. 6 vorzugsweise lediglich einfarbig ausgebildet ist. Das Segment 725 ist vorzugsweise zumindest in einem Betriebsmodus 200, 300 von Fig. 3, 400 von Fig. 4 aktiviert. Im aktivierten Zustand leuchtet das Segment 725 in der ersten oder zweiten Darstellungsart. In Fig. 7 ist das Segment 725 beispielhaft im ersten und zweiten Betriebsmodus 200, 300 von Fig. 3 deaktiviert und lediglich im dritten Betriebsmodus 400 von Fig. 4 aktiviert, wobei das Segment 725 vorzugsweise in der zweiten Darstellungsart 310 bzw. der zweiten Farbe leuchtet. Hierbei visualisiert das Segment 725 beispielhaft die Einheit Grad 410 von Fig. 4.

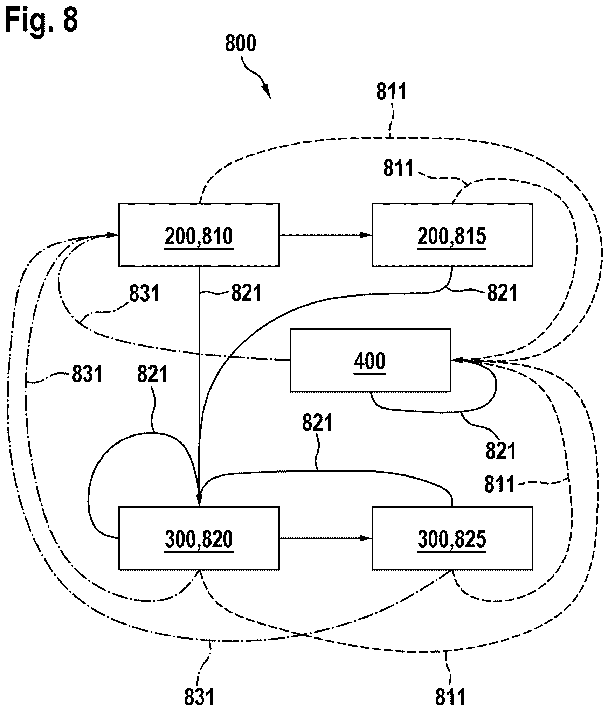

Fig. 8 zeigt ein beispielhaftes Verfahren 800 zum Betreiben des Rotationslasers 100 von Fig. 1. Insbesondere ist das Verfahren zum Anzeigen einer Neigung der Achse 131 der Lasereinheit 130 des Rotationslasers 100 von Fig. 1 relativ zum Lot bzw. zu einer horizontalen Ebene ausgebildet.

Im ersten Betriebsmodus 200 von Fig. 2, Fig. 6 und Fig. 7, bzw. dem Selbstnivellierungs-Modus, wird, wie oben beschrieben, vorzugsweise immer die Zielneigung "0.0%" in der ersten Darstellungsart 230 von Fig. 2, Fig. 6 und Fig. 7 bzw. der ersten Farbe angezeigt. Vorzugsweise ist die Zielneigung in Prozent 240 von Fig. 2, Fig. 3 und Fig. 6 angegeben. Während eines Ausrichtungsvorgangs 810, also bei einer Neigung ungleich der Zielneigung "0.0%", blinkt die Segmentanzeige 221 von Fig. 2 bis Fig. 7 bzw. die in der Segmentanzeige 221 von Fig. 2 bis Fig. 7 angezeigte Zielneigung "0.0%". Ist der Ausrichtungsvorgang 810 beendet, also ein Zielzustand 815, bei dem die Zielneigung "0.0%" eingestellt ist, erreicht, so leuchtet die Segmentanzeige 221 von Fig. 2 bis Fig. 7 bzw. die Zielneigung "0.0%" konstant in der ersten Darstellungsart 230 von Fig. 2, Fig. 6 und Fig. 7, bzw. in der ersten Farbe.

Im zweiten Betriebsmodus 300 von Fig. 3 und Fig. 6, bzw. dem Neigungseinstellungs-Modus, wird, wie oben beschrieben, vorzugsweise immer die von einem Benutzer des Rotationslasers 100 von Fig. 1 eingestellte Zielneigung in der zweiten Darstellungsart 310 von Fig. 3 bis Fig. 6 bzw. der zweiten Farbe angezeigt. Hierbei kann die Zielneigung durch ein Bedienen der Bedienelemente 231, 232 eingegeben, insbesondere schrittweise reduziert oder erhöht, werden. Alternativ kann die Zielneigung z.B. über eine Bluetooth-Verbindung (Smartphone-App, Fernbedienung, etc.) vorgegeben werden. Vorzugsweise ist die Zielneigung in Prozent 240 von Fig. 2, Fig. 3 und Fig. 6 angegeben. Während eines Ausrichtungsvorgangs 820, also bei einer Neigung ungleich der eingestellten Zielneigung, blinkt die Segmentanzeige 221 von Fig. 2 bis Fig. 7 bzw. die in der Segmentanzeige 221 von Fig. 2 bis Fig. 7 angezeigte Zielneigung. Ist der Ausrichtungsvorgang 820 beendet, also ein Zielzustand 825, bei dem die eingestellte Zielneigung eingestellt ist, erreicht, so leuchtet die Segmentanzeige 221 von Fig. 2 bis Fig. 7 bzw. die Zielneigung konstant in der zweiten Darstellungsart 310 von Fig. 3 bis Fig. 6, bzw. in der zweiten Farbe.

Im dritten Betriebsmodus 400 von Fig. 4 und Fig. 5, bzw. im manuellen Modus, wird, wie oben beschrieben, vorzugsweise immer die aktuelle Neigung, die von einem Benutzer des Rotationslasers 100 von Fig. 1 eingestellt wird, in der zweiten Darstellungsart 310 von Fig. 3 bis Fig. 6 bzw. der zweiten Farbe angezeigt. Vorzugsweise ist die aktuelle Neigung in Grad 410 von Fig. 4 und Fig. 5 angegeben. Die aktuelle Neigung wird durch ein Bedienen der Bedienelemente 231, 232 von Fig. 2 bis Fig. 7 durch einen Benutzer des Rotationslasers 100 von Fig. 1 direkt verändert, d.h. die Neigungseinstellungseinheit 182 von Fig. 1 wird direkt von der Steuer- und Regelungseinheit 195 von Fig. 1 zum Einstellen der Neigung angesteuert. Die Segmentanzeige 221 von Fig. 2 bis Fig. 7 leuchtet im dritten Betriebsmodus 400 von Fig. 4 und Fig. 5 bzw. im manuellen Modus immer konstant in der zweiten Darstellungsart 310 von Fig. 3 bis Fig. 6, bzw. in der zweiten Farbe.

Durch eine erste Eingabe 831 im zweiten Betriebsmodus 300 von Fig. 3 und/oder im dritten Betriebsmodus 400 von Fig. 4 und Fig. 5 wird der erste Betriebsmodus 200 von Fig. 2, Fig. 6 und Fig. 7 aktiviert. Vorzugsweise ist die erste Eingabe 831 ein vergleichsweise kurzes und gleichzeitiges Drücken der beiden Bedienelemente 231, 232 von Fig. 2 bis Fig. 7.

Durch eine zweite Eingabe 821 im ersten Betriebsmodus 200 von Fig. 2, Fig. 6 und Fig. 7 und/oder im dritten Betriebsmodus 400 von Fig. 4 und Fig. 5 wird der zweite Betriebsmodus 300 von Fig. 3 und Fig. 6 aktiviert. Bevorzugt ist die zweite Eingabe 821 ein Drücken eines der Bedienelemente 231, 232 von Fig. 2 bis Fig. 7 zum Einstellen der Zielneigung.

Durch eine dritte Eingabe 811 im ersten Betriebsmodus 200 von Fig. 2, Fig. 6 und Fig. 7 und/oder im zweiten Betriebsmodus 300 von Fig. 3 und Fig. 6 wird der dritte Betriebsmodus 400 von Fig. 4 und Fig. 5 aktiviert. Vorzugsweise ist die dritte Eingabe 811 ein vergleichsweise langes und gleichzeitiges Drücken der beiden Bedienelemente 231, 232 von Fig. 2 bis Fig. 7.

## Patentansprüche

1. Rotationslaser mit einem Gehäuse (110), in dem eine Lasereinheit (130) und eine Nivelliereinheit (180) angeordnet sind, wobei die Nivelliereinheit (180) mindestens einen Neigungssensor (184) zur Ermittlung einer jeweiligen Ausrichtung einer der Lasereinheit (130) zugeordneten Achse (131) relativ zum Gehäuse (110) sowie mindestens eine Neigungseinstellungseinheit (182) zum Einstellen einer vorgegebenen Zielneigung der zugeordneten Achse (131) relativ zum Gehäuse (110) aufweist, und wobei eine Bedieneinheit (150) mit einer Eingabeeinheit (152) und einer Anzeigeeinheit (151) vorgesehen ist, **dadurch gekennzeichnet, dass** die Anzeigeeinheit (151) dazu ausgebildet ist, in einem ersten Betriebsmodus (200) des Rotationslasers (100) die vorgegebene Zielneigung der zugeordneten Achse (131) in einer ersten Darstellungsart (230), insbesondere in einer ersten Farbe, zu visualisieren.

2. Rotationslaser nach Anspruch 1, **dadurch gekennzeichnet, dass** die Anzeigeeinheit (151) dazu ausgebildet ist, in einem zweiten und/oder dritten Betriebsmodus (300; 400) des Rotationslasers (100) eine vorgegebene Zielneigung oder eine aktuelle Neigung der zugeordneten Achse (131) in einer zweiten Darstellungsart (310), insbesondere in einer zweiten Farbe, zu visualisieren.

3. Rotationslaser nach Anspruch 1 oder 2, **dadurch gekennzeichnet, dass** der erste Betriebsmodus (200) ein Selbstnivellierungs-Modus ist, in dem die vorgegebene Zielneigung einer deckungsgleichen Neigung der zugeordneten Achse (131) mit einer horizontalen Ebene entspricht.

4. Rotationslaser nach einem der vorhergehenden Ansprüche, **dadurch gekennzeichnet, dass** der zweite Betriebsmodus (300) ein Neigungseinstellungs-Modus ist, in dem die vorgegebene Zielneigung einer Neigung der zugeordneten Achse (131) in einem vorgegebenen Winkel zu einer horizontalen Ebene entspricht.

5. Rotationslaser nach einem der vorhergehenden Ansprüche, **dadurch gekennzeichnet, dass** der dritte Betriebsmodus (400) ein manueller Modus ist, in dem die Anzeigeeinheit (151) eine aktuelle Neigung der zugeordneten Achse (131) zu einer horizontalen Ebene anzeigt.

6. Rotationslaser nach Anspruch 5, **dadurch gekennzeichnet, dass** im manuellen Modus (400) ein Benutzer des Rotationslasers (100) die mindestens eine Neigungseinstellungseinheit (182) zum Ausrichten in eine vorgegebene Zielneigung der zugeordneten Achse (131) zur horizontalen Ebene manuell bedient.

7. Rotationslaser nach einem der vorhergehenden Ansprüche, **dadurch gekennzeichnet, dass** eine Steuer- und Regelungseinheit (195) vorgesehen ist, die in zumindest einem Betriebsmodus (200; 300; 400) die mindestens eine Neigungseinstellungseinheit (182) derart ansteuert, dass eine durch den mindestens einen Neigungssensor (184) ermittelte Neigung der zugeordneten Achse (131) deckungsgleich zu einer horizontalen Ebene oder einer vorgegebenen Zielneigung der zugeordneten Achse (131) ausgerichtet wird, wobei die Anzeigeeinheit (151) einen der horizontalen Ebene oder einem der vorgegebenen Zielneigung zugeordneten Zahlenwert (251; 451) während der Ausrichtung blinkend anzeigt.

8. Rotationslaser nach einem der vorhergehenden Ansprüche, **dadurch gekennzeichnet, dass** die Anzeigeeinheit (151) in zumindest einem Betriebsmodus (200; 300; 400) bei einer einer horizontalen Ebene entsprechenden deckungsgleichen Ausrichtung der Neigung der zugeordneten Achse (131) und/oder bei einer deckungsgleichen Ausrichtung der Neigung entsprechend der vorgegebenen Zielneigung der zugeordneten Achse (131) einen der Zielneigung zugeordneten Zahlenwert (251; 451) dauerhaft anzeigt.

9. Rotationslaser nach einem der vorhergehenden Ansprüche, **dadurch gekennzeichnet, dass** die Anzeigeeinheit (151) als Segmentanzeige (221) ausgebildet ist, wobei ein separates Segment (225, 226, 227) zur Visualisierung eines zumindest einem Betriebsmodus (200; 300; 400) zugeordneten Zahlenwertes in Prozent (240; 640), eines zugeordneten Zahlenwertes in Grad (410) und/oder eines Vorzeichens des angezeigten Zahlenwertes vorgesehen ist.

10. Rotationslaser nach Anspruch 9, **dadurch gekennzeichnet, dass** die Segmentanzeige (221) zweifarbig ausgebildet ist und/oder das separate Segment (225, 226, 227) einfarbig oder zweifarbig ausgebildet ist, oder dass eine Hintergrundbeleuchtung der Anzeigeeinheit (151) zweifarbig ausgebildet ist.

11. Rotationslaser nach einem der vorhergehenden Ansprüche, **dadurch gekennzeichnet, dass** die Anzeigeeinheit (151) einen einer ersten Neigungsachse zugeordneten ersten Bereich (220) zum Anzeigen einer ersten Neigung der zugeordneten Achse (131) entlang der ersten Neigungsachse und einen einer zweiten Neigungsachse zugeordneten zweiten Bereich (620) zum Anzeigen einer zweiten Neigung entlang der zweiten Neigungsachse aufweist.

12. Verfahren (800) zum Anzeigen einer Neigung einer einer Lasereinheit (130) eines Rotationslasers (100) zugeordneten Achse (131) relativ zu einem Gehäuse (110) des Rotationslasers (100) nach einem der vorhergehenden Ansprüche, das folgende Schritte aufweist:
• Auswahl des ersten, zweiten oder dritten Betriebsmodus (200; 300; 400),
• Einstellen einer Zielneigung von einer horizontalen Ebene, oder Einstellen einer aktuellen Neigung der zugeordneten Achse (131) der Lasereinheit (130) gegenüber einer horizontalen Ebene, und
• Anzeigen der Zielneigung im ersten Betriebsmodus (200) mittels einer Visualisierung in einer ersten Darstellungsart (230), insbesondere einer ersten Farbe, oder Anzeigen der Zielneigung im zweiten Betriebsmodus (300) in einer zweiten Darstellungsart (310), insbesondere einer zweiten Farbe, oder Anzeigen der aktuellen Neigung der zugeordneten Achse (131) im dritten Betriebsmodus (400) in der zweiten Darstellungsart (310), insbesondere der zweiten Farbe, in einer Anzeigeeinheit (151).

13. Verfahren nach Anspruch 12, **dadurch gekennzeichnet, dass** ein der aktuellen Neigung oder der vorgegebenen Zielneigung zugeordneter Zahlenwert (251; 451) in Prozent (240; 640) oder in Grad (410) dargestellt wird.

14. Verfahren nach Anspruch 12 oder 13, **dadurch gekennzeichnet, dass** bei einem Verfahren der Neigungseinstellungseinheit (182) in eine horizontale Ebene oder in die vorgegebene Zielneigung der zugeordneten Achse (131) die Zielneigung auf der Anzeigeeinheit (151) blinkend angezeigt wird.

15. Verfahren nach einem der Ansprüche 12 bis 14, **dadurch gekennzeichnet, dass** in zumindest einem Betriebsmodus (200; 300; 400) ein der Zielneigung der zugeordneten Achse (131) oder ein der aktuellen Neigung zugeordneter Zahlenwert (451) bis zu einem vorgegebenen Wert mit einem Trennzeichen (228) zur Erzeugung einer Dezimalstelle angezeigt wird und ab einem Wert, der größer als der vorgegebene Wert ist, mit deaktiviertem Trennzeichen (228) dargestellt wird.
